Europäisches Patentamt

European Patent Office

Office européen des brevets

(19)

(11) Veröffentlichungsnummer: **0 261 588**
**B1**

(12) **EUROPÄISCHE PATENTSCHRIFT**

(45) Veröffentlichungstag der Patentschrift:
**13.06.90**

(21) Anmeldenummer: **87113588.5**

(22) Anmeldetag: **17.09.87**

(51) Int. Cl.⁵: **F16N 11/04, F16N 21/00**

(54) Selbsttätige Schmiermittel-Dosierungsvorrichtung.

(30) Priorität: **25.09.86 CH 3853/86**
    **13.03.87 CH 947/87**

(43) Veröffentlichungstag der Anmeldung:
    **30.03.88 Patentblatt 88/13**

(45) Bekanntmachung des Hinweises auf die Patenterteilung:
    **13.06.90 Patentblatt 90/24**

(84) Benannte Vertragsstaaten:
    **CH DE FR GB IT LI**

(56) Entgegenhaltungen:
    **CH-A- 137 544**
    **DE-B- 1 009 446**
    **DE-C- 83 368**
    **DE-C- 274 749**
    **DE-C- 323 979**
    **GB-A- 413 021**
    **US-A- 1 352 986**
    **US-A- 1 522 062**
    **US-A- 1 571 436**
    **US-A- 1 717 288**
    **US-A- 2 850 336**
    **US-A- 2 857 020**
    **US-A- 2 999 725**
    **US-A- 3 206 261**
    **US-A- 3 231 317**

(73) Patentinhaber: **AGINFOR AG für industrielle Forschung,**
    **Alberich-Zwyssig-Strasse 49, CH-5430 Wettingen(CH)**

(72) Erfinder: **Güttinger, Frank, Katharinaweg 4,**
    **CH-5422 Oberehrendingen(CH)**

(74) Vertreter: **Klein, Ernest, Sandstrasse 24,**
    **CH-5416 Kirchdorf AG(CH)**

## Beschreibung

### Gebiet der Erfindung

Die Erfindung betrifft eine selbsttätige Schmiermittel-Dosierungsvorrichtung für die Schmierung einer sich drehenden Welle, wobei das Gehäuse der Vorrichtung an einem die zu schmierende Welle umgebenden, feststehenden Maschinenteil angeordnet ist, und wobei die Vorrichtung mit einem Kolben/Zylindersystem versehen ist,

– dessen Kolben über ein Druckmittel beaufschlagt ist, welches vorzugsweise eine oberhalb des Kolbens im Gehäuse einliegende Druckfeder mit sehr flacher Charakteristik ist,

– dessen Schmiermittelvorrat unterhalb des Kolbens im Zylinder angeordnet ist und sich in einem geschlossenen, zusammendrückbaren Balg befindet, welcher mit einer Zuleitung zur Schmierstelle versehen ist,

– und dessen Kolben in Wirkverbindung mit einem abreibbaren Material steht, wobei das Material an einer den Abrieb fördernden Stelle der Welle anliegt.

### Stand der Technik

Eine derartige Vorrichtung ist bekannt aus der US-A 3 206 261. Es handelt sich dort um eine Vorrichtung, welche nicht eine eigentliche Dosierung, worunter eine stetige Förderung verstanden wird, zum Gegenstand hat. Vielmehr wirkt dort der federbelastete Kolben erst dann auf den Schmiermittelbalg, wenn das abreibbare Material in Stiftform vollständig abgerieben ist.

Dabei wird jeweils in einem Schub eine grössere Menge Schmierfett in das Wälzlager gefördert. Die Vorrichtung ist ringförmig konzipiert und ist in unmittelbarer Nähe des zu schmierenden Lagers innerhalb des Gehäuses angeordnet. Durch diesen maschineninternen Einbau entzieht sich die Fördervorrichtung hinsichtlich Funktionskontrolle und Schmiermittelstand einer regelmässigen Kontrolle. Ausserdem verunmöglicht diese Konfiguration den nachträglichen Einbau in bereits bestehende Maschinen. Ganz besonders ungeeignet ist sie in solchen Anlagen, bei denen während des Betriebes ständig neues Schmiermittel an die Lagerstelle heranzuführen ist.

### Darstellung der Erfindung

Der Erfindung liegt deshalb die Aufgabe zugrunde, eine einfache, wartungsfreundliche und im Betrieb ständig wirksame Schmiermittelförderung zu schaffen.

Erfindungsgemäss wird dies dadurch erreicht, dass

– das Gehäuse der Vorrichtung aussen am Maschinenteil angeordnet ist, vorzugsweise in der Nähe eines freien Wellenendes,

– und dass die Zuleitung zur Schmierstelle im Wellenbereich über ein in einer zentralen Bohrung der Welle vorzugsweise berührungslos einliegendes Rohr erfolgt, dessen Austritt in eine mit der Schmierstelle verbundene Radialbohrung mündet.

Von Vorteil ist insbesondere, dass eine derartige Schmiermittel-Dosierungsvorrichtung in jeder beliebigen Winkelstellung am Maschinenteil angeordnet werden kann. Ferner erübrigen sich jegliche Rohrverschraubungen und wellenseitige Abdichtungen bei der Einführung der Zuleitung.

Zwar ist aus der US-A 1 352 986 eine Zuleitung zu einer Schmierstelle bekannt, bei der die Zuleitung über ein berührungslos einliegendes Rohr erfolgt, dessen Austritt in eine mit der Schmierstelle mittelbar verbundene Radialbohrung mündet.

Jedoch mündet dort das ölführende Rohr, welches koaxial zu einer Kurbelwelle angeordnet ist, nicht in eine zentrale Bohrung der zu schmierenden Welle, sondern in den erweiterten axialen Teil einer mitrotierenden radialen Zuleitung, die an der zu schmierenden, gleitgelagerten Kurbel befestigt ist.

Insbesondere wenn in der Ebene der Mündung des Rohres respektive der Radialbohrung die Wellenbohrung mit einer umlaufenden Auffangnut für das Schmiermittel versehen ist, so hat dies den Vorteil, dass auch im Stillstand der Welle das beispielsweise temperaturbedingte Heraustropfen von Schmiermittel aus dem Zuleitungsrohr nicht zu einem Auslaufen aus der zentralen Wellenbohrung führt.

Da die Vorrichtung anlässlich der Wellendrehung stetig fördern soll, hat man, wenn das Druckmittel eine oberhalb des Kolbens im Gehäuse einliegende Druckfeder mit sehr flacher Charakteristik ist, eine einfaches Mittel in der Hand, bei sonst festliegenden Parametern über die blosse Federauswahl die zu fördernde Schmiermittelmenge pro Zeiteinheit zu bestimmen.

Dadurch, dass der Schmiermittelvorrat sich in einem geschlossenen, zusammendrückbaren Balg befindet, weist das System keinerlei Dichtigkeitsprobleme auf. Das Auswechseln eines entleerten Balges gegen eine neue Füllung kann problemlos durchgeführt werden.

Sollen mehrere Lagerstellen mit Schmiermittel bedient werden, so empfiehlt es sich, dass der Balg in mehrere inhaltlich getrennte Kammern unterteilt ist, wobei sich die Kammern jeweils über die ganze Zylinderhöhe erstrecken. Die Kammern können dabei sowohl nebeneinanderliegend über den Umfang angeordnet sein als auch als konzentrisch ineinandergeschachtelte Ringkammern ausgebildet sein.

Es empfiehlt sich, dass das abreibbare Material ein mit der Kolbenunterseite verbundener Stift aus beispielsweise Graphit ist, welcher das feststehende Maschinenteil über eine Bohrung durchdringt und an die Wellenoberfläche angedrückt wird. Die somit geschaffene funktionelle Einheit Kolben/Stift kann auch als austauschbare kommerzielle Einheit geschaffen werden.

Wenn die den Abrieb fördernde Stelle der Welle gekordelt oder kreuzrandiert ist und sich vorzugsweise über den ganzen Wellenumfang erstreckt, so kann diese gezielte Rauhigkeit als Festwert für die Abstimmung mit dem abreibbaren Stift und der Druckfeder zugrundegelegt werden.

Steht der die Welle umgebende Raum unter Druck, so empfiehlt es sich, diesen Raum druckmässig mit dem Innenraum der Dosierungsvorrichtung zu verbinden. Dadurch ist allein die Federkraft massgebend für den Vorschub des abreibbaren Materials.

Kurze Beschreibung der Zeichnung

In der Zeichnung sind zwei Ausführungsbeispiele der Erfindung schematisch dargestellt.
Es zeigt:

Fig.1 eine erste Ausführungsvariante anhand einer einzelnen zu schmierenden Lagerstelle;
Fig.2 eine zweite Ausführungsvariante mit zwei unter Druck stehenden Lagerstellen;
Fig.3 einen Querschnitt nach Linie A-A in Fig.2;
Fig.4 einen Querschnitt gemäss Fig.3 mit einer Variante der Balganordnung.

In den verschiedenen Figuren sind die einander entsprechenden Teile jeweils mit dem gleichen Bezugszeichen versehen.

Weg zur Ausführung der Erfindung

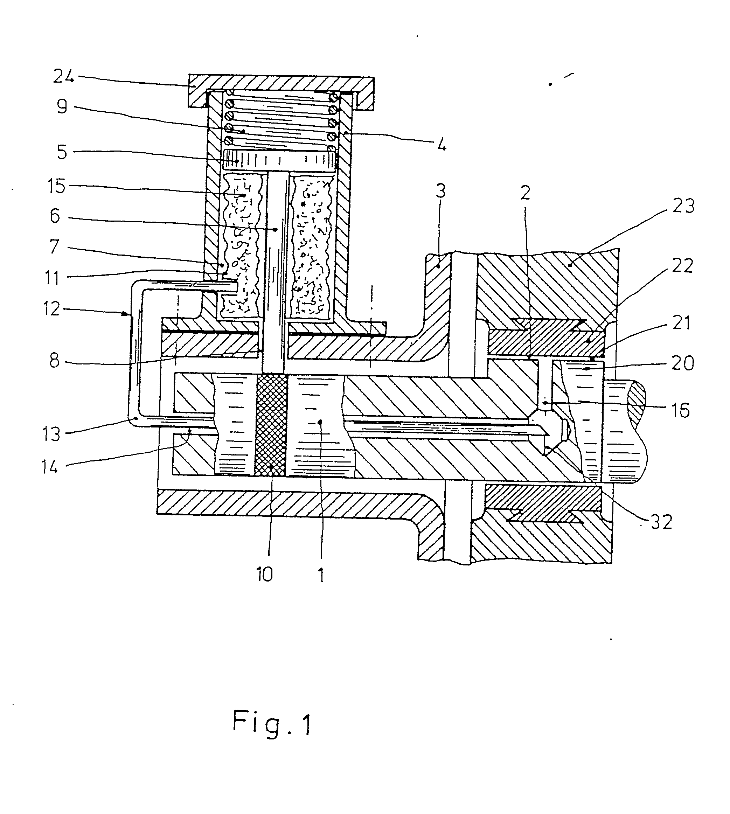

In Fig.1 sind erfindungsunwesentliche Teile wie beispielsweise der Aufbau und die Funktionsweise der zum Lager gehörenden Maschine fortgelassen. Zum Verständnis der Erfindung genügt es zu wissen, dass es sich bei der Welle 1 um eine Nochenwelle handelt, und dass der Nocken 20 in einem Gleitlager geführt ist. Bei dem mit dem Lagermetall 22 versehenen Maschinenteil kann es sich um eine der Nockenbewegung folgende Scheibe handeln. Der Ringspalt 21 zwischen Nocken und Lagermetall bildet somit die eigentliche Schmierstelle 2. Zugrundegelegt wird eine Fettschmierung. Nicht gezeigt sind eventuell erforderliche seitliche Lagerabdichtungen.

Das freie, kragende Wellenende ist von einem feststehenden Maschinenteil 3, bspw. dem Aussengehäuse der Maschine umgeben. Am äussersten Ende dieses Maschinenteils 3 ist das Gehäuse 4 der Dosierungsvorrichtung mittels strichliert angedeuteter Schraubverbindung angeflanscht. Die Grundform dieses Gehäuses kann beliebig sein. Im Gehäuse, welches im vorliegenden Fall zylindrisch ist und durch einen aufgeschraubten Deckel 24 verschlossen ist, befindet sich ein Kolben 5. Mit dem Kolben verbunden ist ein zylindrischer Stift 6, der gemäss der Erfindung aus einem verschleissarmen, d.h. abreibbaren Material besteht. Je nach gewünschtem Vorschub kann es sich dabei um Graphit, um einen graphithaltigen Stoff oder ein sonstwie geeignetes Material handeln. Der Stift ist in seiner Länge so bemessen, dass er in seiner obersten Position im Zylinder 7 diesen am Boden durchdringt und sich durch eine Bohrung 8 im feststehenden Maschinenteil 3 an die Welle 1 andrückt.

Die Gegenfläche an der Welle ist in Form einer Kreuzrandierung 10 mechanisch aufgerauht. Die Randrierung erstreckt sich über den gesamtem Wellenumfang und ist so ausgeführt, dass das abreibbare Material des Stiftes 6 die in die Wellenoberfläche eingeschnitten Täler nicht zusetzt.

Das für den Abrieb benötigte Druckmittel 9 ist im vorliegenden Fall eine metallische Druckfeder mit einer sehr flachen Charakteristik. Sie befindet sich im Gehäuse 4 zwischen Kolbenoberseite und Deckel 24. Selbstverständlich ist jedes andere Druckmittel geeignet, welches in der Lage ist, den Kolben 5 mit annähernd gleichbleibender Kraft durch den Zylinder 7 durchzuschieben.

Hierbei ist zu beachten, dass das Druckmittel 9 nicht bloss die Andrückkraft des Stiftes 6 überwinden muss, sondern ganz besonders die Funktion eines Schmiermittelförderers ausüben muss. Das Schmiermittel, hier Fett, befindet sich im Zylinder 7 unterhalb des Kolbens 5. Es ist in einem geschlossenen Balg 11 enthalten, der um den Stift 6 herum angeordnet ist uns so den Zylinder ausfüllt. Der Balg ist so beschaffen, dass er sich vom druckbeaufschlagen Kolben 5 zusammendrücken lässt.

Dabei entleert er seinen Inhalt in die Zuleitung 12 zur Schmierstelle 2. Diese Zuleitung besteht im einfachsten Fall aus einem gebogenen Rohr 13. Eines der Rohrenden ist durch eine Gehäuseöffnung hindurch in den Balg 11 gesteckt, bezw. es kann ein Mundstück des Balges über das Rohrende gestülpt sein. Das andere Rohrende dringt berührungslos tief in die Welle 1 ein. Hierzu ist diese Welle 1 mit einer entsprechend dimensionierten zentralen Bohrung 14 versehen, die vom Wellenende bis hin zur Ebene der Schmierstelle 2 reicht. In dieser Ebene ist das Rohrende abgeschrägt, derart, dass es das Schmiermittel unmittelbar in eine Radialbohrung 16 entlässt, die direkt in den Schmierspalt mündet.

Mit dieser Konfiguration ist ohne besondere Dichtheitsvorkehrungen gewährleistet, dass kein Schmiermittel an Wellenende herausrinnt. Dies gilt für den Stillstand der Maschine, bei welchem sich der Kolben 5 über den Stift 6 lediglich an der Welle 1 abstützt und somit keinen Druck auf den Balg 11 ausübt. Dies gilt auch für den Fall bei drehender Welle, wo infolge des durch den Stiftabrieb und den Federdruck verursachten Kolbenvorschubs das Schmiermittel zunächst durch das Rohr 13 gefördert wird und dann infolge Fliehkraft aus der schrägen Mündung in die Radialbohrung 16 geschleudert wird. Die durch die Fliehkraft erfolgte Druckerhöhung im Schmiermittel gestattet die einwandfreie Verteilung im Rinspalt 21 und die Erfüllung der eigentlichen Schmierfunktion.

Sollte es doch gelegentlich vorkommen, dass beim Stillstand der Welle einige Tropfen Schmiermittel aus der schrägen Rohrmündung herausrinnen, was beispielsweise infolge von Temperatureinflüssen passieren kann, so werden diese in jedem Fall geringe Mengen in der umlaufenden Auffangnut 32 gesammelt. Beim nächsten Wellendrehen soll dieses Schmiermittel durch Fliehkraft in die Radialbohrung gefördert werden. Hierzu ist die tiefste Stelle der V-Förmigen Auffangnut in der Ebene dieser Radialbohrung angeordnet, in welcher selbstverständlich auch die Mündung des Förderrohres liegt.

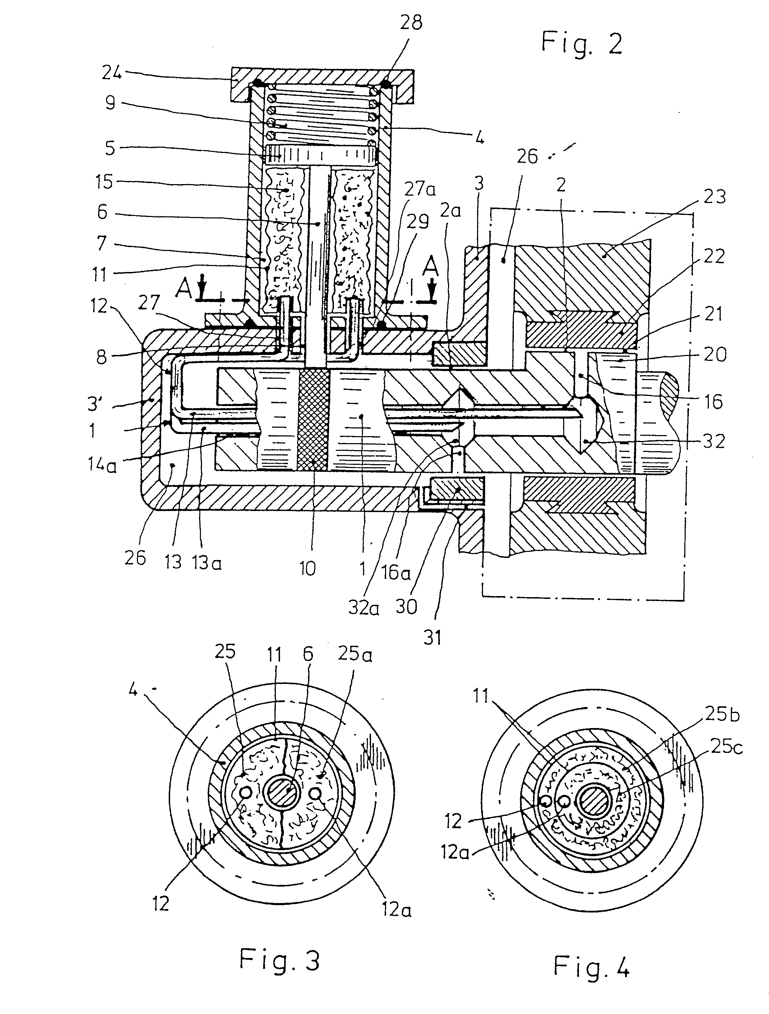

Fig.2 zeigt die Schmiermittel-Dosierungsvorrichtung in einer Anlage, deren Innenraum - wie strichpunktiert angedeutet - nach aussen abgeschlossen ist. Es kann sich dabei im einen Verdichter handeln, wodurch unterstellt ist, dass der Raum 26 zwischen den bewegten Teilen 1,2 und dem feststehenden Maschinenteil 3 unter Druck steht. Um auf eine kostspielige und störanfällige Wellendichtung zu verzichten, ist zur Vermeidung von Arbeitsmittelverlusten das feststehende Teil 3, das Maschinengehäuse also, im Bereich des Wellenendes mit einem stirnseitigen Verschluss 3' versehen. Um bei allen möglichen Druckverhältnissen eine einwandfreie Schmierung zu gewährleisten, wird der Zylinder 7 und damit der Balg 11 mit dem gleichen Druck beaufschlagt, wie er im Raum 26 und damit auch in der Wellenbohrung 14a vorherrscht. Im Gegensatz zum Beispiel nach Fig.1 wird die Zuleitung 12 hierzu durch den Boden des Gehäuses 4 aus der Dosierungsvorrichtung herausgeführt und über ein entsprechend angeordnetes Durchgangsloch 27 im Maschinenteil 4 in den Wellenbereich geleitet. Das Durchgangsloch 27 und die Bodenöffnung sind so bemessen, dass die Zuleitung 12 die beiden nichtdichtend durchdringt. Damit herrscht jeweils Druckgleichheit im Maschineninnenraum 26 und dem Zylinderraum 7. Dabei kann dahingestellt bleiben, ob der Druckausgleich nicht ohnehin über die den Stift 7 aufnehmende Bohrung 8 erfolgen kann. Es versteht sich, dass der Deckel 24 gegen das Gehäuse 4 und der Gehäuseboden gegen den Maschinenteil 3 abgedichtet werden. Im vorliegenden Fall ist dies durch einfaches Anbringen von Runndichtungen 28 resp. 29 dargestellt.

Würde die Zuleitung so geführt wie in Fig.1, so müssten zusätzlich sowohl ihre seitliche Herausführung aus dem Gehäuse 4 als auch die erforderliche stirnseitige Einführung in den Verschluss 3' abgedichtet werden.

Ein weiterer Vorteil der Bodendurchführung zeigt sich dann, wenn mehrere Schmierstellen zu bedienen sind. Im vorliegenden Beispiel ist die Welle 1 noch über ein radiales Traglager 30 abgestützt.

Eine Druckausgleichbohrung 31 verbindet den geschlossenen Innenraum um das Wellenende mit jenem um den bewegten Maschinenteil 23. Der Schmierspalt 2a diese Traglagers wird über eine Radialbohrung 16a in der Welle 1 versorgt. Die Wellenbohrung ist in der Ebene der Radialbohrung 16a mit einer Auffangnut 32a versehen. Da eine unabhängige Schmierung vorgesehen ist, wird die Radialbohrung 16a über das Rohr 13a einer separaten Zuleitung 12a angespeist. Entsprechend grösser bemessen für die Aufnahme der beiden Rohre 13 und 13a ist die zentrale Wellenbohrung 14a. Wie die Leitung 12 ist auch die Zuleitung 12a über Durchgangslöcher 27a im Maschinenteil 3 und im Gehäuseboden mit dem Balg 11 verbunden.

Handelt es sich dabei um einen einzigen Balg, so bestimmt sich - sieht man davon ab, dass der eigentliche Schmierspalt für den Schmiermittelverbrauch massgebend sein kann - die Fördermenge in den Zuleitung 12 und 12a jeweils entsprechend ihren Querschnitten.

Wie Fig.3 zeigt, hat man hier jedoch ein einfacheres Steuermittel zur Hand, in dem beispielsweise jede Zuleitung mit einem eigenen Balgabschnitt verbunden ist. Dabei können die senkrecht geteilten Kammern 25, 25a in Abweichung zur dargestellten Form auch unterschiedliche Querschnitte aufweisen. Anlässlich des Kolbenhubes werden dann diesen Querschnitten entsprechende Schmiermittelmengen in den Zuleitungen gefördert. Es versteht sich, dass auf diese Weise auch mehrere, tortenförmig nebeneinander angeordnete Kammern vorgesehen werden können.

In Fig.4 ist eine Anordnung dargestellt, für die sich die in Fig.2 beschriebene Zuleitungsführung ganz besonders eignet. Die getrennten Kammern 25b, 25c sind hier ineinandergeschachtelt und bilden zylindrische Ringkammern. Es ist leicht erkennbar, dass auch hier über die blosse Zuordnung entsprechender Ringquerschnitte unterschiedliche Mengen pro Hubeinheit gefördert werden können. Eine seitliche Herausführung der Zuleitungen würde hier für die innere Kammer 25c umständlich sein.

Ein weiterer Vorteil der in den Fig.3 und 4 gezeigten Anordnungen ist darin zu sehen, dass mit einer einzigen Dosierungsvorrichtung die Möglichkeit gegeben ist, dem Bedarf der Lagerstellen entsprechend unterschiedliche Schmiermittelarten zu fördern.

Selbstverständlich ist die Erfindung nicht auf die gezeigten und beschriebenen Ausführungsbeispiele beschränkt. Neben zahlreichen möglichen Ein- und Anbauvarianten der Dosierungsvorrichtung unterliegt auch die Wahl vom Druckmittel, vom abreibbaren Material, von der Wellenrauhigkeit an der Angriffsstelle, ja selbst vom Schmiermittel kaum einer Beschränkung. Selbstverständlich können auch weitere Zusatzeinrichtungen, wie beispielsweise eine externe Anzeige der jeweiligen Kolbenstellung, eine Verschleissanzeige und dergleichen die Handhabung der Vorrichtung noch einfacher gestalten.

## Patentansprüche

1. Selbsttätige Schmiermittel-Dosierungsvorrichtung für die Schmierung einer sich drehenden Welle, wobei das Gehäuse (4) der Vorrichtung an einem die zu schmierende Welle (1) umgebenden, feststehenden Maschinenteil (3) angeordnet ist, und wobei die Vorrichtung mit einem Kolben/Zylindersystem versehen ist,

– dessen Kolben (5) über ein Druckmittel (9) beaufschlagt ist, welches vorzugsweise eine oberhalb des Kolbens (5) im Gehäuse (4) einliegende Druckfeder mit sehr flacher Charakteristik ist,

– dessen Schmiermittelvorrat (15) unterhalb des Kolbens (5) im Zylinder (7) angeordnet ist und sich in einem geschlossenen, zusammendrückbaren Balg (11) befindet, welcher mit einer Zuleitung (12, 12a), zur Schmierstelle (2, 2a) versehen ist,

– und dessen Kolben (5) in Wirkverbindung mit einem abreibbaren Material steht, wobei das Material an einer den Abrieb fördernden Stelle (10) der Welle (1) anliegt, dadurch gekennzeichnet, dass

– das Gehäuse (4) der Vorrichtung aussen am Maschinenteil (3) angeordnet ist, vorzugsweise in der Nähe eines freien Wellenendes,

– und dass die Zuleitung (12, 12a) zur Schmierstelle (2, 2a) im Wellenbereich über ein in einer zentralen Bohrung (14, 14a) der Welle vorzugsweise berührungslos einliegendes Rohr (13, 13a) erfolgt, dessen Austritt in eine mit der Schmierstelle (2, 2a) verbundene Radialbohrung (16, 16a) mündet.

2. Schmiermittel-Dosierungsvorrichtung nach Anspruch 1, dadurch gekennzeichnet, dass der Balg (11) in mindestens zwei inhaltlich getrennte Kammern (25, 25a, 25b, 25c) mit je einer Zuleitung (12, 12a) zu einer Schmierstelle (2, 2a) unterteilt ist, und dass sich die Kammern jeweils über die ganze Höhe des Zylinders (7) erstrecken.

3. Schmiermittel-Dosierungsvorrichtung nach Anspruch 2, dadurch gekennzeichnet, dass die Kammern (25b, 25c) konzentrisch zueinander im Zylinder (7) angeordnet sind, wobei die Zuleitungen (12, 12a) vorzugsweise über Durchgangslöcher (27, 27a) im Maschinenteil (3) geführt sind.

4. Schmiermittel-Dosierungsvorrichtung nach Anspruch 1, dadurch gekennzeichnet, dass das abreibbare Material ein mit der Kolbenunterseite verbundener Stift (6), beispielsweise aus Graphit ist, welcher das feststehende Maschinenteil (4) über eine Bohrung (8) durchdringt und an die Wellenoberfläche angedrückt wird.

5. Schmiermittel-Dosierungsvorrichtung nach Anspruch 1, dadurch gekennzeichnet, dass die den Abrieb fördernde Stelle (10) der Welle gekordelt oder kreuzrandriert ist und sich vorzugsweise über den ganzen Wellenumfang erstreckt.

6. Schmiermittel-Dosierungsvorrichtung nach Anspruch 1, dadurch gekennzeichnet, dass bei Anwendung in einer Anlage, in welcher der Raum (26) zwischen Welle (1) und Maschinenteil (3) unter Druck steht, dieser Raum (26) mit dem Zylinderraum (7) kommuniziert, vorzugsweise über das Durchgangsloch (27, 27a) für die Zuleitung (12, 12a).

7. Schmiermittel-Dosierungsvorrichtung nach Anspruch 1, dadurch gekennzeichnet, dass in der Ebene der Mündung des Rohres (13, 13a) und der Radialbohrung (16, 16a) die Wellenbohrung (14, 14a) mit einer umlaufenden Auffangnut (32, 32a) für das Schmiermittel versehen ist.

**Revendications**

1. Dispositif de dosage automatique de lubrifiant pour la lubrification d'un arbre tournant, dans lequel le carter (4) du dispositif est attaché à un élément de machine (3) fixe qui entoure l'arbre (1) à lubrifier, et dans lequel le dispositif est pourvu d'un système à piston/cylindre,
   – dont le piston (5) est chargé par un organe de pression (9) qui est de préférence un ressort de pression à caractéristique très plate logé dans le carter (4) au-dessus du piston (5),
   – dont le réservoir de lubrifiant (15) est disposé sous le piston (5) dans le cylindre (7) et se trouve dans un soufflet (11) compressible fermé, qui est pourvu d'une conduite (12, 12a) d'amenée du lubrifiant au point de graissage (2, 2a),
   – et dont le piston (5) est en liaison active avec un matériau s'usant par frottement, le matériau étant appliqué sur une zone (10) de l'arbre (1) favorisant l'usure, caractérisé en ce que
   – le carter (4) du dispositif est disposé extérieurement par rapport à l'élément de machine (3), de préférence à proximité d'une extrémité libre de l'arbre, et
   – la conduite (12, 12a) d'amenée au point de graissage (2, 2a) dans la région de l'arbre est réalisée par un tube (13, 13a) posé, de préférence sans contact, dans un alésage central (14, 14a) de l'arbre et dont l'extrémité de sortie débouche dans un alésage radial (16, 16a) relié au point de graissage (2, 2a).

2. Dispositif de dosage de lubrifiant suivant la revendication 1, caractérisé en ce que le soufflet (11) est subdivisé en au moins deux chambres (25, 25a, 25b, 25c) ayant les contenus séparés et présentant chacune une conduite d'amenée (12, 12a) à un point de graissage (2, 2a), et en ce que chacune des chambres s'étend sur la totalité de la hauteur du cylindre (7).

3. Dispositif de dosage de lubrifiant suivant la revendication 2, caractérisé en ce que les chambres (25b, 25c) sont disposées concentriquement l'une à l'autre dans le cylindre (7), les conduites d'amenée (12, 12a) étant de préférence menées à travers des trous de passage (27, 27a) ménagés dans l'élément de machine (3).

4. Dispositif de dosage de lubrifiant suivant la revendication 1, caractérisé en ce que le matériau s'usant par frottement est un barreau, par exemple en graphite, relié à la face inférieure du piston, et qui traverse l'élément de machine (3) par un alésage (8) et qui est pressé contre la surface de l'arbre.

5. Dispositif de dosage de lubrifiant suivant la revendication 1, caractérisé en ce que la zone (10) de l'arbre favorisant l'usure est striée ou doublement striée et s'étend de préférence sur tout le pourtour de l'arbre.

6. Dispositif de dosage de lubrifiant suivant la revendication 1, caractérisé en ce qu'en cas d'application dans une installation dans laquelle l'espace (26) situé entre l'arbre (1) et l'élément de machine (3) se trouve sous pression, cet espace (26) communique avec l'intérieur du cylindre (7), de préférence par le trou de passage (27, 27a) pour la conduite d'amenée (12, 12a).

7. Dispositif de dosage de lubrifiant suivant la revendication 1, caractérisé en ce que, dans le plan de l'embouchure du tube (13, 13a) et de l'alésage radial (16, 16a), l'alésage (14, 14a) de l'arbre est pourvu d'une rainure circonférentielle (32, 32a) de collecte du lubrifiant.

**Claims**

1. Automatic lubricant-proportioning device for lubricating a rotating shaft, the housing (4) of the device being arranged on a fixed machine part (3) surrounding the shaft (1) to be lubricated, and the device being provided with a piston/cylinder system,
   – whose piston (5) is acted upon via a pressure means (9) which is preferably a compression spring enclosed in the housing (4) above the piston (5) and having a very flat characteristic,
   – whose lubricant supply (15) is arranged below the piston (5) in the cylinder (7) and is located in closed, compressible bellows (11) which are provided with a feed line (12, 12a) to the lubricating point (2, 2a),

– and whose piston (5) is in operative connection with an abradable material, the material bearing against a point (10) of the shaft (1) promoting the abrasion, characterized in that

– the housing (4) of the device is arranged on the outside of the machine part (3), preferably near to a free shaft end,

– and in that the feed line (12, 12a) leading to the lubricating point (2, 2a) in the shaft area is effected via a pipe (13, 13a) which is enclosed, preferably without contact, in a central bore (14, 14a) of the shaft and whose outlet leads into a radial bore (16, 16a) connected to the lubricating point (2, 2a).

2. Lubricant-proportioning device according to Claim 1, characterized in that the bellows (11) are subdivided into at least two chambers (25, 25a, 25b, 25c) which are separate as regards contents and have one feed line (12, 12a) each leading to a lubricating point (2, 2a), and in that the chambers each extend over the entire height of the cylinder (7).

3. Lubricant-proportioning device according to Claim 2, characterized in that the chambers (25b, 25c) are arranged concentrically to one another in the cylinder (7), the feed lines (12, 12a) preferably being run via through-holes (27, 27a) in the machine part (3).

4. Lubricant-proportioning device according to Claim 1, characterized in that the abradable material is a pin (6), for example made of graphite, which is connected to the underside of the piston, passes through the fixed machine part (3) via a bore (8) and is pressed against the shaft surface.

5. Lubricant-proportioning device according to Claim 1, characterized in that the point (10) of the shaft promoting the abrasion is knurled diagonally or axially and circumferentially and extends preferably over the entire shaft periphery.

6. Lubricant-proportioning device according to Claim 1, characterized in that, when used in an installation in which the space (26) between shaft (1) and machine part (3) is under pressure, this space (26) communicates with the cylinder spate (7), preferably via the through-hole (27, 27a) for the feed line (12, 12a).

7. Lubricant-proportioning device according to Claim 1, characterized in that, in the plane of the orifice of the pipe (13, 13a) and the radial bore (16, 16a), the shaft bore (14, 14a) is provided with an encircling collecting groove (32, 32a) for the lubricant.

Fig. 1

Fig. 2

Fig. 3

Fig. 4